(19) Europäisches Patentamt
European Patent Office
Office européen des brevets

(11) EP 4 465 476 A1

(12) EUROPÄISCHE PATENTANMELDUNG

(43) Veröffentlichungstag:
20.11.2024 Patentblatt 2024/47

(21) Anmeldenummer: 24168397.8

(22) Anmeldetag: 04.04.2024

(51) Internationale Patentklassifikation (IPC):
H02J 7/00 (2006.01)    B60L 53/63 (2019.01)
B60L 53/67 (2019.01)   B60L 53/68 (2019.01)

(52) Gemeinsame Patentklassifikation (CPC):
H02J 7/0013; B60L 53/63; B60L 53/67; B60L 53/68

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH MA MD TN

(30) Priorität: 20.04.2023 DE 102023109989
13.09.2023 DE 102023124725

(71) Anmelder:
• Linde Material Handling GmbH
63743 Aschaffenburg (DE)

• STILL GmbH
22113 Hamburg (DE)

(72) Erfinder:
• Wilken, Hauke
22159 Hamburg (DE)
• Karakurt, Bahattin
22119 Hamburg (DE)
• Götzinger, Jonathan
63322 Rödermark (DE)

(74) Vertreter: Patentship Patentanwaltgesellschaft
Schertlinstraße 29
86159 Augsburg (DE)

(54) **VORRICHTUNG ZUM STEUERN EINER VIELZAHL VON STEUEREINRICHTUNGEN FÜR EINE VIELZAHL VON BATTERIE-AUFLADEEINRICHTUNGEN**

(57) Die Erfindung betrifft eine zentrale Vorrichtung (110a) zum Leistungsmanagement einer Vielzahl von lokalen Steuerungseinrichtungen (110a-c) zum Steuern einer Vielzahl von Aufladeeinrichtungen (120a-c) zum Aufladen einer Vielzahl von Batterien für eine Vielzahl von Flurförderzeugen (130a-c). Die zentrale Vorrichtung (110a) umfasst eine Kommunikationsschnittstelle (113a), welche ausgebildet ist, von jeder mit einer jeweiligen Vielzahl von Aufladeeinrichtungen (120a-c) verbundenen lokalen Steuerungseinrichtung (110a-c) Leistungsdaten über eine jeweilige Leistung der Vielzahl von Aufladeeinrichtungen (120a-c) der jeweiligen lokalen Steuerungseinrichtung (110a-c) zu empfangen. Ferner umfasst die zentrale Vorrichtung (110a) eine Prozessoreinrichtung (111a), welche ausgebildet ist, auf der Grundlage der Leistungsdaten jeder lokalen Steuerungseinrichtung der Vielzahl von lokalen Steuerungseinrichtungen (110a-c) einen Teil einer Gesamtleistung zuzuweisen, welche der Vielzahl von lokalen Steuerungseinrichtungen (110a-c) zur Verfügung steht.

Fig. 1

**Beschreibung**

Die Erfindung betrifft eine Vorrichtung, ein System und ein Verfahren zum Verwalten einer Vielzahl von lokalen Steuerungseinrichtungen zum Steuern einer Vielzahl von Aufladeeinrichtungen zum Aufladen einer Vielzahl von aufladbaren Batterien, insbesondere einer Vielzahl von aufladbaren Batterien zum Antreiben einer Vielzahl von Flurförderzeugen.

Für den Transport und die Lagerung von Produkten, Waren und Materialien werden oftmals Ladungsträger, beispielsweise Gitterboxen oder Paletten, insbesondere Europaletten verwendet. Zur Handhabung derartiger Ladungsträger z.B. in der Intralogistik, d.h. dem innerbetrieblichen Materialfluss, z.B. in einem Warenlager, werden in der Regel teilweise automatisierte Flurförderzeuge, z.B. Gabelstapler, Industrieroboter und dergleichen eingesetzt. Derartige Flurförderzeuge werden häufig durch elektrische Batterien angetrieben, die an Aufladeeinrichtungen in Form von Ladestationen wieder elektrisch aufgeladen werden müssen. Dabei sind in der Vergangenheit vermehrt Bleibatterien und in letzter Zeit immer mehr Lithiumbatterien zum Einsatz gekommen. Eine Vielzahl derartiger Aufladeeinrichtungen bzw. Ladestationen kann von einer zentralen Steuerungseinrichtung angesteuert werden, um beispielsweise eine Gesamtaufladeleistung jeder Aufladeeinrichtung vorzugeben.

Zum Beispiel bei sehr großen Warenlagern oder bei über mehrere Gebäude oder Standorte verteilte Warenlager kann es nachteilig sein, beispielsweise hinsichtlich der Ausfallsicherheit, eine einzelne zentrale Steuerungseinrichtung zum Steuern einer Vielzahl von Aufladeeinrichtungen vorzusehen.

Vor diesem Hintergrund liegt der vorliegenden Erfindung die Aufgabe zugrunde, eine Vorrichtung, ein System und ein Verfahren zum Verwalten einer Vielzahl von lokalen Steuerungseinrichtungen bereitzustellen, wobei jede lokale Steuerungseinrichtung ausgebildet ist, eine Vielzahl von Aufladeeinrichtungen zum Aufladen einer Vielzahl von aufladbaren Batterien anzusteuern, insbesondere einer Vielzahl von aufladbaren Batterien zum Antreiben einer Vielzahl von Flurförderzeugen.

Diese Aufgabe wird gemäß einem ersten Aspekt der Erfindung durch eine Leistungsmanagementvorrichtung zum Verwalten einer Vielzahl von lokalen Steuerungseinrichtungen gelöst, wobei jede lokale Steuerungseinrichtung ausgebildet ist, eine Vielzahl von Aufladeeinrichtungen zum Aufladen einer Vielzahl von aufladbaren Batterien anzusteuern, insbesondere einer Vielzahl von aufladbaren Batterien zum Antreiben einer Vielzahl von Flurförderzeugen. Die Leistungsmanagementvorrichtung umfasst eine Kommunikationsschnittstelle, welche ausgebildet ist, von jeder mit einer jeweiligen Vielzahl von Aufladeeinrichtungen verbundenen lokalen Steuerungseinrichtung Leistungsdaten über eine jeweilige Leistung der Vielzahl von Aufladeeinrichtungen der jeweiligen lokalen Steuerungseinrichtung zu empfangen. Ferner umfasst die Leistungsmanagementvorrichtung eine Prozessoreinrichtung, welche ausgebildet ist, auf der Grundlage der Leistungsdaten jeder lokalen Steuerungseinrichtung für die Vielzahl von lokalen Steuerungseinrichtungen einen Teil einer Gesamtleistung zu bestimmen und der entsprechenden lokalen Steuerungseinrichtung zuzuweisen, welche der Vielzahl von lokalen Steuerungseinrichtungen zur Verfügung steht. Die Leistungsmanagementvorrichtung erlaubt ein effektives Leistungsmanagement der Vielzahl von Aufladeeinrichtungen über die Vielzahl von lokalen Steuerungseinrichtungen und kann daher vorteilhaft insbesondere in großen Warenlagern oder bei über mehrere Gebäude oder Standorte verteilten Warenlagern eingesetzt werden.

Gemäß einer Ausführungsform ist die Prozessoreinrichtung ausgebildet, auf der Grundlage der Leistungsdaten und einer jeweiligen Priorität der zu einer jeweiligen lokalen Steuerungseinrichtung dazugehörigen Aufladeeinrichtungen jeder lokalen Steuerungseinrichtung der Vielzahl von lokalen Steuerungseinrichtungen einen Teil der Gesamtleistung zuzuweisen.

In einer weiteren Ausführungsform ist die Prozessoreinrichtung ausgebildet, auf der Grundlage der Leistungsdaten und eines globalen Leistungsgrenzwertes jeder lokalen Steuerungseinrichtung der Vielzahl von lokalen Steuerungseinrichtungen einen Teil der Gesamtleistung zuzuweisen.

Gemäß einer Ausführungsform ist die Prozessoreinrichtung ausgebildet, auf der Grundlage der Leistungsdaten und eines jeweiligen Leistungsgrenzwertes der jeweiligen lokalen Steuerungseinrichtung jeder lokalen Steuerungseinrichtung der Vielzahl von lokalen Steuerungseinrichtungen einen Teil der Gesamtleistung zuzuweisen.

Gemäß einem zweiten Aspekt der Erfindung wird ein System zum Aufladen einer Vielzahl von Batterien für eine Vielzahl von Flurförderzeugen bereitgestellt. Das System umfasst eine Vielzahl von lokalen Steuerungseinrichtungen zum Steuern einer Vielzahl von Aufladeeinrichtungen zum Aufladen der Vielzahl von Batterien für die Vielzahl von Flurförderzeugen. Ferner umfasst das System eine zentrale Vorrichtung gemäß dem ersten Aspekt der Erfindung zum Leistungsmanagement der Vielzahl von lokalen Steuerungseinrichtungen.

In einer Ausführungsform ist jede lokale Steuerungseinrichtung ausgebildet, in zeitlichen Abständen oder in Reaktion auf ein definiertes Ereignis, von jeder mit einer jeweiligen Batterie elektrisch verbundenen dazugehörigen Aufladeeinrichtung über eine jeweilige Datenverbindung Statusinformationen über den Aufladestatus der Aufladeeinrichtung abzufragen und/oder zu empfangen.

Gemäß einer Ausführungsform können die Statusinformationen über den Aufladestatus einer Aufladeeinrichtung Informationen über einen Aufladestrom, eine Aufladespannung, eine Aufladeleistung, einen Aufladefüllstand einer Batterie, eine Seriennummer einer Batterie, eine Seriennummer eines Flurförderzeugs, mit dem die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallladeleistung der Aufladeeinrichtung umfassen.

In einer Ausführungsform umfasst das System ferner die Vielzahl von Aufladeeinrichtungen mit einer Vielzahl von ersten Aufladeeinrichtungen zum Aufladen einer Vielzahl von aufladbaren Lithiumbatterien und einer Vielzahl von zweiten Aufladeeinrichtungen zum Aufladen einer Vielzahl von aufladbaren Bleibatterien.

Gemäß einer Ausführungsform umfasst das System ferner die Vielzahl von Flurförderzeugen, wobei die Vielzahl von Flurförderzeugen eine Vielzahl von Gabelstaplern und/oder mobilen Industrierobotern umfasst.

Gemäß einem dritten Aspekt der Erfindung wird ein Verfahren zum Betreiben einer Vorrichtung zum Leistungsmanagement einer Vielzahl von lokalen Steuerungseinrichtungen zum Steuern einer Vielzahl von Aufladeeinrichtungen zum Aufladen einer Vielzahl von Batterien für eine Vielzahl von Flurförderzeugen bereitgestellt. Das Verfahren umfasst die Schritte:

Empfangen von Leistungsdaten von jeder mit einer jeweiligen Vielzahl von Aufladeeinrichtungen verbundenen lokalen Steuerungseinrichtung über eine jeweilige Leistung der Vielzahl von Aufladeeinrichtungen der jeweiligen lokalen Steuerungseinrichtung; und

Bestimmen auf der Grundlage der Leistungsdaten für jede lokale Steuerungseinrichtung der Vielzahl von lokalen Steuerungseinrichtungen eines Teils einer Gesamtleistung, welche der Vielzahl von lokalen Steuerungseinrichtungen zur Verfügung steht.

Gemäß einer Ausführungsform kann das Bestimmen der jeweiligen Teile des Gesamtleistung zentral durch die Vorrichtung in Form eines externen Servers oder in Form einer lokalen Master-Steuerungseinrichtung erfolgen, welche die so bestimmen Werte den lokalen Steuerungseinrichtungen zuweist. Gemäß einer weiteren Ausführungsform kann das Bestimmen eines jeweiligen Teils des Gesamtleistung dezentral durch jede der lokalen Steuerungseinrichtungen erfolgen.

Das Verfahren gemäß dem dritten Aspekt der Erfindung kann mittels der Vorrichtung gemäß dem ersten Aspekt der Erfindung durchgeführt werden. Daher ergeben sich weitere mögliche Ausführungsformen des Verfahrens gemäß dem dritten Aspekt der Erfindung aus den vorstehend und nachstehend beschriebenen weiteren Ausführungsformen der Vorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt:

Figur 1 eine schematische Darstellung eines erfindungsgemäßen Systems mit einer erfindungsgemäßen zentralen Vorrichtung zum Leistungsmanagement einer Vielzahl von lokalen Steuerungseinrichtungen zum Steuern einer Vielzahl von Aufladeeinrichtungen; und

Figur 2 ein Flussdiagramm, welches Schritte eines Verfahrens zum Energiemanagement einer Vielzahl von lokalen Steuerungseinrichtungen zum Steuern einer Vielzahl Aufladeeinrichtungen gemäß einer Ausführungsform illustriert.

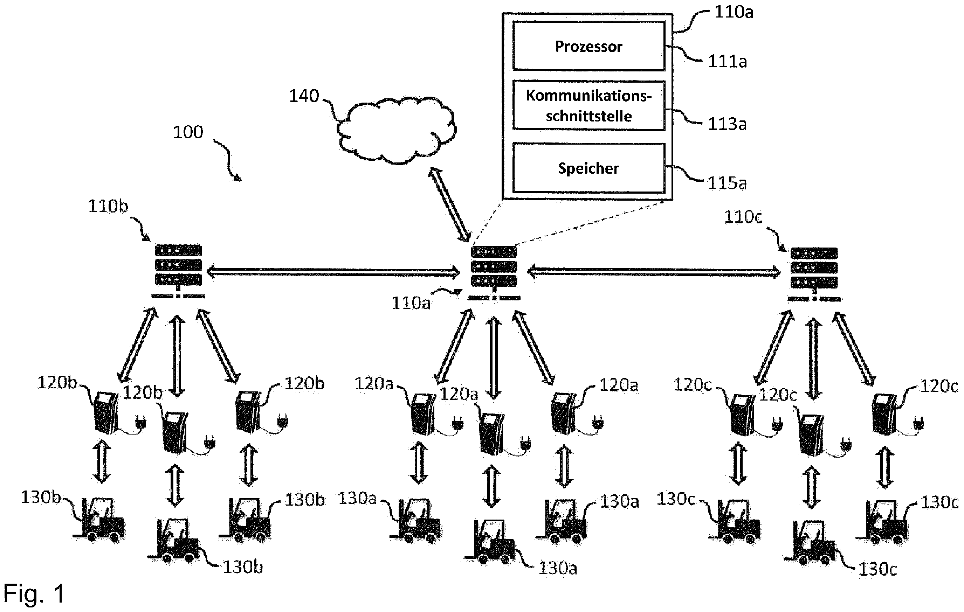

Figur 1 zeigt eine schematische Darstellung eines erfindungsgemäßen Systems 100 mit einer erfindungsgemäßen zentralen Vorrichtung, insbesondere zentralen Datenverarbeitungsvorrichtung 110a zum Leistungsmanagement einer Vielzahl von lokalen Steuerungseinrichtungen 11 0b, 110c. Bei der in Figur 1 dargestellten Datenverarbeitungsvorrichtung 110a kann es sich beispielsweise um einen Industrie-PC, einen Server, insbesondere einen Cloud-Server, oder eine vergleichbare Datenverarbeitungseinrichtung handeln.

In der in Figur 1 dargestellten Ausführungsform weist die Vorrichtung 110a neben der im folgenden im Detail beschriebenen Funktionalität zum Leistungsmanagement der Vielzahl von lokalen Steuerungseinrichtungen 110b,c ferner die Funktionalität einer lokalen Steuerungseinrichtung 110a auf. Bei einer solchen Ausführungsform kann die Vorrichtung als eine lokale Master-Steuerungseinrichtung 110a implementiert sein und die lokalen Steuerungseinrichtungen 110b,c können als lokale Slave-Steuerungseinrichtungen 110b,c implementiert sein. In weiteren Ausführungsformen kann es sich jedoch bei der Vorrichtung 110a um eine dedizierte Datenverarbeitungsvorrichtung handeln, welche die Funktionalität zum Leistungsmanagement der Vielzahl von lokalen Steuerungseinrichtungen 110b, 110c, aber nicht selber nicht die Funktionalität einer lokalen Steuerungseinrichtung implementiert.

Wie in Figur 1 angedeutet, ist jede der Vielzahl von lokalen Steuerungseinrichtungen 110a-c ausgebildet, eine jeweilige Vielzahl von Aufladeeinrichtungen 120a-c zum Aufladen einer Vielzahl von Batterien anzusteuern, indem die jeweilige lokale Steuerungseinrichtung 110a-c jeder der dazugehörigen Aufladeeinrichtungen 120a-c eine Aufladeleistung zuweist. In einer Ausführungsform kann die jeweilige Vielzahl von Aufladeeinrichtungen 120a-c (auch als Ladestationen 120a-c bezeichnet) eine oder mehrere erste Aufladeeinrichtungen 120a,b (auch als LIB-Aufladeeinrichtungen bezeichnet, wobei LIB für "Li-Ion Battery" steht) zum Aufladen einer Vielzahl von aufladbaren Lithiumbatterien und eine oder mehrere zweite Aufladeeinrichtungen 120c (auch als LAB-Aufladeeinrichtungen bezeichnet, wobei LAB für "Lead-Acid Battery" steht) zum Aufladen einer Vielzahl von aufladbaren Bleibatterien umfassen. Dabei können, wie in der Ausführungsform von Figur 1 dargestellt, die Vielzahl von Batterien jeweils Teil eines elektrisch betriebenen Flurförderzeugs 130a-c, insbesondere eines Gabelstaplers 130a-c sein. In einer Ausführungsform können die Batterien jeweils ein Batteriemanagement-System (BMS) umfassen, welches ausgebildet ist, mit der jeweiligen Aufladeeinrichtung 120a-c zu kommunizieren, beispielsweise um aktuelle Messwerte und/oder erfasste Historiendaten der jeweiligen Aufladeeinrichtung 120a-c bereitzustellen.

Gemäß einer Ausführungsform können die Aufladeeinrichtungen 120a-c eine oder mehrere stationäre Aufladeeinrichtungen und/oder eine oder mehrere Onboard-Aufladeeinrichtungen umfassen, welche an einem oder mehreren der Vielzahl von Flurförderzeugen 130a-c angebracht sind, um die im Flurförderzeug installierte Batterie aufzuladen. Die jeweilige Vielzahl von Aufladeeinrichtungen 120a-c sind ausgebildet, mit einem Stromnetz verbunden zu werden und können mit Wechselstrom und/oder Gleichstrom betrieben werden.

Wie in Figur 1 dargestellt, umfasst die zentrale Datenverarbeitungsvorrichtung 110a zum Leistungsmanagement eine Kommunikationsschnittstelle 113a, welche ausgebildet ist, von jeder lokalen Steuerungseinrichtung 110a-c über eine jeweilige Datenverbindung Leistungsdaten über eine jeweilige Leistung der jeweiligen Vielzahl von Aufladeeinrichtungen 120a-c der jeweiligen lokalen Steuerungseinrichtung 110a-c zu empfangen. Wie in Figur 1 angedeutet, kann das System 100 bzw. die Datenverarbeitungsvorrichtung 110a ferner eine Datenschnittstelle aufweisen, um über diese Datenschnittstelle einen Datentransport beispielsweise in ein externes Kommunikationsnetzwerk, insbesondere das Internet 140 zu ermöglichen.

Ferner umfasst die zentrale Datenverarbeitungsvorrichtung 110a eine Prozessoreinrichtung 111a, welche ausgebildet ist, auf der Grundlage der Leistungsdaten von der Vielzahl von lokalen Steuerungseinrichtungen 110a-c jeder lokalen Steuerungseinrichtung der Vielzahl von lokalen Steuerungseinrichtungen 110a-c einen Teil einer Gesamtleistung zuzuweisen, welche der Vielzahl von lokalen Steuerungseinrichtungen 110a-c zur Verfügung steht. Die Prozessoreinrichtung 111a kann beispielsweise einen oder mehrere Prozessoren, Mikroprozessoren oder CPUs umfassen, die dazu ausgebildet sind, eine geeignete Software auszuführen.

Gemäß einer weiteren Ausführungsform kann jede der lokalen Steuerungseinrichtungen 110a ausgebildet sein, auf der Grundlage der Leistungsdaten der anderen lokalen Steuerungseinrichtungen 110a-c sowie der eigenen Leistungsdaten einen jeweiligen Teil der Gesamtleistung zu bestimmen und diese der eigenen Steuerungseinrichtung 110a-c zuzuweisen. Mit anderen Worten: gemäß einer Ausführungsform kann das Bestimmen und Zuweisen des jeweiligen Teils der Gesamtleistung mittels einer dezentralen Berechnung ohne einen dezidierten Master erfolgen.

In einer Ausführungsform umfasst jede lokale Steuerungseinrichtung 110a-c eine Kommunikationsschnittstelle (wie die Kommunikationsschnittstelle 113a der zentralen Datenverarbeitungsvorrichtung 110a), welche ausgebildet ist, von jeder mit einer jeweiligen Batterie elektrisch verbundenen Aufladeeinrichtung 120a-c über eine jeweilige Datenverbindung Statusinformationen über einen Aufladestatus der jeweiligen Aufladeeinrichtung 120a-c zu empfangen. Gemäß einer Ausführungsform kann die Kommunikationsschnittstelle jeder lokalen Steuerungseinrichtung 110a-c eine Schnittstelle für einen Kommunikationsbus, beispielsweise CAN-Bus, eine Ethernet-Verbindung und/oder eine drahtlose Funkverbindung für die Kommunikation mit der jeweiligen Vielzahl von Aufladeeinrichtungen 120a-c umfassen.

Gemäß einer Ausführungsform kann jede lokale Steuerungseinrichtung 110a-c ferner eine Prozessoreinrichtung (wie die Prozessoreinrichtung 111a der zentralen Datenverarbeitungsvorrichtung 110a) umfassen, welche ausgebildet ist, Steuerungsdaten für die jeweilige Vielzahl von Aufladeeinrichtungen 120a-c zu generieren, um den Aufladevorgang, insbesondere die Aufladeleistung einer jeweiligen Aufladeeinrichtung 120a-c zu steuern, d.h. zu konfigurieren oder anzupassen. Jede lokale Steuerungseinrichtung 110a-c kann ferner einen nichtflüchtigen Speicher (wie der nichtflüchtige Speicher 115a der zentralen Datenverarbeitungsvorrichtung 110a) umfassen. Der nichtflüchtige Speicher jeder lokalen Steuerungseinrichtung 110a-c kann ausgebildet sein, Daten und ausführbaren Programmcode zu speichern, der, wenn von der Prozessoreinrichtung der jeweiligen lokalen Steuerungseinrichtung 110a-c ausgeführt, die Prozessoreinrichtung veranlasst, die im Folgenden beschriebenen Funktionen, Operationen und Verfahren durchzuführen.

Wie dies nachstehend im Detail beschrieben wird, ist die Prozessoreinrichtung 111a der zentralen Datenverarbeitungsvorrichtung 110a erfindungsgemäß ausgebildet, auf der Grundlage der Leistungsdaten jeder lokalen Steuerungseinrichtung der Vielzahl von lokalen Steuerungseinrichtungen 110a-c einen Teil einer Gesamtleistung zuzuweisen, welche dem System 100 bzw. der Vielzahl von lokalen Steuerungseinrichtungen 110a-c zur Verfügung steht.

In einer Ausführungsform ist die Kommunikationsschnittstelle 113a jeder lokalen Steuerungseinrichtung 110a-c ausgebildet, in zeitlichen Abständen oder in Reaktion auf ein definiertes Ereignis, von jeder mit einer jeweiligen Batterie elektrisch verbundenen Aufladeeinrichtung 120a-c über eine jeweilige Datenverbindung die Statusinformationen über den Aufladestatus der jeweiligen Aufladeeinrichtung 120a-c abzufragen und/oder zu empfangen. Wie bereits vorstehend beschrieben, kann die jeweilige Datenverbindung beispielsweise durch einen Kommunikationsbus, insbesondere einen CAN-Bus, eine Ethernet-Verbindung oder eine drahtlose Funkverbindung bereitgestellt werden. Hierdurch wird ein effizienter Datenaustausch zwischen jeder lokalen Steuerungseinrichtung 110a-c und den dazugehörigen Aufladeeinrichtungen 120a-c ermöglicht. Bei der fortlaufenden Überprüfung der Aktivität der Aufladeeinrichtungen 120a-c durch die jeweilige lokale Steuerungseinrichtung 110a-c kann es sich sowohl um einen "Pull-Vorgang", der von der jeweiligen lokalen Steuerungseinrichtung 110a-c ausgeht, als auch um einen "Push-Vorgang" handeln, der von der jeweiligen Aufladeeinrichtung 120a-c ausgeht. Beispielsweise können die Statusinformationen über die jeweilige Datenverbindung in festgelegten Zeitabständen automatisch von den Aufladeeinrichtungen 120a-c als Push-Nachrichten an die dazugehörige lokale Steuerungseinrichtung 110a-c geschickt werden. Alternativ oder zusätzlich können die Statusinformationen von der jeweiligen lokalen Steuerungseinrichtung 110a-c über die Kommunikationsschnittstelle 113a aktiv per Pull-Anfrage an die dazugehörigen Aufladeeinrichtungen 120a-c ausgelesen werden. Mit anderen Worten: in einer Ausführungsform ist die Kommunikationsschnittstelle 113a jeder lokalen Steuerungseinrichtung 110a-c ausgebildet, in zeitlichen Abständen oder in Reaktion auf ein definiertes Ereignis, von jeder mit einer jeweiligen Batterie elektrisch verbundenen Aufladeeinrichtung 120a-c über eine jeweilige Datenverbindung die Statusinformationen über den Aufladestatus der Aufladeeinrichtung 120a-c bzw. der mit der jeweiligen Aufladeeinrichtung 120a-c verbundenen Batterie abzufragen und/oder zu empfangen.

Die Statusinformationen über den Aufladestatus einer Aufladeeinrichtung 120a-c bzw. der entsprechenden Batterie können neben den Leistungsdaten Informationen über beispielsweise einen Aufladestrom, eine Aufladespannung, einen Aufladefüllstand der Batterie (SoC = State of Charge), eine Seriennummer der Batterie, eine Seriennummer des Flurförderzeugs 130a-c, mit der die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallaufladeleistung (die bei einem Ausfall der dazugehörigen lokalen Steuerungseinrichtung 110a-c greift) der jeweiligen Aufladeeinrichtung 120a-c umfassen.

Dementsprechend kann jede lokale Steuerungseinrichtung 110a-c ausgebildet sein, die Steuerungsdaten derart zu generieren, dass ein Aufladestrom, eine Aufladespannung, eine Aufladeleistung, eine Rückfallladeleistung, ein Aufladestartzeitpunkt, ein Aufladeendzeitpunkt, eine Gesamtaufladezeitdauer und/oder eine verbleibende Aufladezeitdauer des Aufladevorgangs einer jeweiligen dazugehörigen Aufladeeinrichtung 120a-c konfiguriert oder angepasst wird.

Eine Leistungssteuerung der Aufladeeinrichtungen 120a-c mittels der von einer jeweiligen lokalen Steuerungseinrichtung 110a-c generierten Steuerungsdaten kann beispielsweise derart erfolgen, dass der Ladevorgang der LAB-Aufladeeinrichtungen mit einer konstanten Maximalleistung berücksichtigt wird (die im Verlauf des Ladevorgangs zeitlich schwanken kann und von der Ladecharakteristik der jeweiligen Batterie abhängt). Alternativ kann die Leistung mittels der Statusinformationen zyklisch neu bzw. dynamisch von der jeweiligen lokalen Steuerungseinrichtung 110a-c erfasst werden und entsprechend bei der Leistungssteuerung der LIB-Aufladeeinrichtungen berücksichtigt werden.

In einer Ausführungsform ist die Prozessoreinrichtung 111a der zentralen Datenverarbeitungsvorrichtung 110a und/oder die Prozessoreinrichtung jeder lokalen Steuerungseinrichtung 110a-c ausgebildet, jeder Batterie der Vielzahl von Batterien und/oder jeder Aufladeeinrichtung der Vielzahl von Aufladeeinrichtungen 120a-c eine Aufladepriorität (beispielsweise eine Priorität 1, 2 oder 3) einer Vielzahl von möglichen Aufladeprioritäten zuzuweisen und auf der Grundlage der Leistungsdaten und der Aufladepriorität jeder lokalen Steuerungseinrichtung der Vielzahl von lokalen Steuerungseinrichtungen 110a-c einen Teil einer Gesamtleistung zuzuweisen, welche dem System 100 bzw. der Vielzahl von lokalen Steuerungseinrichtungen 110a-c zur Verfügung steht. Vorteilhafterweise kann die erfindungsgemäße zentrale Datenverarbeitungsvorrichtung 110a hierdurch die Aufladevorgänge von Batterien und/oder Aufladeeinrichtungen 120a-c mit unterschiedlichen Aufladeprioritäten effizient steuern. Die jeweilige Aufladepriorität kann von der Vorrichtung 110a beispielsweise für einzelne Aufladeeinrichtungen 120a-c und/oder Batterien festgelegt werden und zusätzlich auch von anderen Größen wie dem Ladefüllstand der Batterie (auch als "State of Charge, SOC" bezeichnet) abhängig sein. Die Prioritätsfestlegung und dessen Kombinatorik kann von der Vorrichtung 110a (beispielsweise durch einen Benutzer) konfiguriert werden. Falls keine Priorität festgelegt wird, kann eine Standardpriorität verwendet werden.

Im Folgenden wird ein detailliertes Ausführungsbeispiel des durch die Prozessoreinrichtung 111a der zentralen Vorrichtung 110a implementierten Leistungsmanagements der Aufladeeinrichtungen 120a-c beschrieben, welches zur Illustration einer beispielhaften Ausführungsform der Erfindung dient. Dabei werden die folgend aufgelisteten Parameter bzw. Variablen verwendet.

$P_{\text{Grid}}$ bezeichnet die vom Netzanschluss oder Netzbetreiber dem System 100 bereitgestellte bzw. physikalisch mögliche Leistung. Dabei kann es sich um die Wirkleistung, die Blindleistung, oder die Scheinleistung handeln. Diese Leistung wird in der Regel lokal durch die Verbindung zum elektrischen Netz bestimmt (beispielsweise durch die Netzverbindungskapazität, die Scheinleistung von Transformatoren der Netzverbindung, einen Nennstrom von Kabeln, Sicherungen und anderen elektrischen Leistungsvorrichtungen). Die vom Netzbetreiber bereitgestellte Leistung sollte nicht überschritten werden, um eine Beschädigung von Sicherungen und/oder eine Überlastung der Netzausrüstung (Kabel und dergleichen) zu vermeiden.

$n_{\text{chargers}}$ steht für die Gesamtanzahl der Aufladeeinrichtungen 120a-c im System 100. Dieser Wert kann die Gesamtanzahl aller Aufladeeinrichtungen 120a-c, der LIB-Aufladeeinrichtungen oder der LAB-Aufladeeinrichtungen bezeichnen. Dieser Wert ist in der Regel konstant, kann sich aber durch das Hinzufügen oder Entfernen von Aufladeeinrichtungen in das System 100 ändern.

$n_{activeChargers}$ steht für die Anzahl der Aufladeeinrichtungen 120a-c im System 100, welche momentan mit einer Batterie elektrisch verbunden, d.h. aktiv sind. Dieser Wert kann für alle Aufladeeinrichtungen 120a-c, die LIB-Aufladeeinrichtungen und/oder die LAB-Aufladeeinrichtungen im System 100 definiert werden. Dieser Wert ist in der Regel zeitlich variabel.

$P_{min,\ Charger,i}$ steht für eine Untergrenze (Minimum) für die tatsächliche Wechselstromwirkleistung, die für eine Aufladeeinrichtung 120a-c, insbesondere LIB-Aufladeeinrichtung 120a-c eingestellt werden kann. Ein entsprechender Wert kann auch für die Blindleistung, Nennleistung oder eine andere elektrischen Eigenschaft (z.B. den Wechselstrom) der jeweiligen Aufladeeinrichtung 120a-c definiert werden.

$P_{max,\ Charger,i}$ steht für eine Obergrenze (Maximum) für die tatsächliche Wechselstromwirkleistung, die für eine Aufladeeinrichtung 120a-c, insbesondere LIB-Aufladeeinrichtung 120a-c eingestellt werden kann. Ein entsprechender Wert kann auch für die Blindleistung, Nennleistung oder eine andere elektrischen Eigenschaft (z.B. den Wechselstrom) der jeweiligen Aufladeeinrichtung 120a-c definiert werden.

Die folgenden Berechnungsgrößen können aus den vorstehend eingeführten Werten wie folgt ermittelt werden.

Leistungsverhältnis für eine jeweilige Aufladeeinrichtung 120a-c:

$$F_{\mathrm{min,max,\ Charger},i} = \frac{P_{\mathrm{min,\ Charger},i}}{P_{\mathrm{max,\ Charger},i}}.$$

Gesamtmaximalwirkleistung aller aktiven Aufladeeinrichtungen 120a-c:

$$P_{\mathrm{max,active,\ Chargers}} = \sum_{i=1}^{n_{\mathrm{active,Chargers}}} P_{\mathrm{max,\ Charger},i}.$$

Gesamtminimalwirkleistung aller aktiven Aufladeeinrichtungen 120a-c:

$$P_{\mathrm{min,active,\ Chargers}} = \max\left(F_{\mathrm{min,max,,active\ Charger},i}\right) \cdot P_{\mathrm{max,\ active,Chargers}}.$$

Gesamtmaximalwirkleistung aller Aufladeeinrichtungen 120a-c:

$$P_{\mathrm{max,\ Chargers}} = \sum_{i=1}^{n_{\mathrm{Chargers}}} P_{\mathrm{max,\ Charger},i}.$$

Gesamtminimalwirkleistung aller Aufladeeinrichtungen 120a-c:

$$P_{\mathrm{min,\ Chargers}} = \max\left(F_{\mathrm{min,max,\ Charger},i}\right) \cdot P_{\mathrm{max,\ Chargers}}.$$

$P_{Limit,Global}$ steht für die maximale gesamte Wechselstromwirkleistung, d.h. für die summierte Wechselstromgesamtleistung aller aktiven Aufladeeinrichtungen 120a-c, die im Rahmen des Leistungsmanagements verteilt wird.

$P_{charge,\ Charger,\ i}$ steht für die der i-ten LIB-Aufladeeinrichtung 120a,b momentan zugewiesene Wechselstromleistung, die durch die Prozessoreinrichtung 111 der Vorrichtung 110 gemäß den hierin beschriebenen Ausführungsformen bestimmt wird.

Wie bereits vorstehend beschrieben, ist jede lokale Steuerungseinrichtung 110a-c ausgebildet, Leistungsdaten an die zentrale Datenverarbeitungsvorrichtung 110a zu übermitteln. In einer Ausführungsform können die Leistungsdaten jeder lokalen Steuerungseinrichtung 110a-c die jeweilige maximale Gesamtleistung aller dazugehörigen aktiven Aufladeeinrichtungen 120a-c für Batterien unterschiedlicher Priorität umfassen, beispielsweise für drei unterschiedliche Prioritäten:

$$P_{\mathrm{CU}_i,\mathrm{max,active,Chargers}} = \begin{bmatrix} P_{\mathrm{max,active,Chargers,Prio1}} \\ P_{\mathrm{max,active,Chargers,Prio2}} \\ P_{\mathrm{max,active,Chargers,Prio3}} \end{bmatrix},$$

wobei $CU_i$ die i-te lokale Steuerungseinrichtung (im Englischen "control unit") 110a-c bezeichnet.

Die Prozessoreinrichtung 111a der zentralen Vorrichtung 110a ist ausgebildet, die Leistungsdaten von allen lokalen Steuerungseinrichtungen 110a-c zu aggregieren, beispielsweise durch Summieren der maximalen Gesamtleistungen aller aktiven Aufladeeinrichtungen 120a-c der lokalen Steuerungseinrichtungen 110a-c für Batterien unterschiedlicher Priorität:

$$P_{\text{Total}=} = \begin{bmatrix} P_{\text{Total,Prio1}} \\ P_{\text{Total,Prio2}} \\ P_{\text{Total,Prio3}} \end{bmatrix} = \sum_{i=1}^{n_{\text{UNIT}}} P_{\text{CU}_i,\text{max,active,Chargers}}.$$

In einer ersten Aufladephase ist die zentrale Datenverarbeitungsvorrichtung 110a ausgebildet die vorhandene maximale Gesamtleistung allen Aufladeeinrichtungen 120a-c mit der höchsten Priorität (hier beispielhaft als Prio1 bezeichnet) zuzuweisen, d.h.:

$$P_{\text{Limit,Global,Prio1}} = P_{\text{Limit,Global}}.$$

Die zentrale Datenverarbeitungsvorrichtung 110a ist ferner ausgebildet, den globalen Skalierungsfaktor zur relativen Leistungszuweisung für alle Aufladeeinrichtungen 120a-c mit der höchsten Priorität so zu bilden, dass

$$SF_{\text{Global,Prio1}} = \frac{P_{\text{Limit,Global,Prio1}}}{P_{\text{Total,Prio1}}} \approx 1.$$

Die zentrale Datenverarbeitungsvorrichtung 110a ist ferner ausgebildet, Grenzwerte für den globalen Skalierungsfaktor $SF_{\text{Global,Prio1}}$ anzuwenden. Hierzu ist gemäß einer Ausführungsform die Prozessoreinrichtung 111a der zentralen Datenverarbeitungsvorrichtung 110a ausgebildet, die Gesamtleistung für die i-te lokale Steuerungseinrichtung 110a-c zum Aufladen der Batterien höchster Priorität auf der Grundlage der folgenden Gleichung zu bestimmen:

$$P_{\text{CU}_i,\text{Prio1}} = SF_{\text{Global,Prio1}} \cdot P_{\text{CU}_i,\text{max,active,Chargers,Prio1}}.$$

In einer Ausführungsform ist die Prozessoreinrichtung 111a der zentralen Datenverarbeitungsvorrichtung 110a ausgebildet, für jede lokale Steuerungseinrichtung 110a-c zu überprüfen, ob die auf der Grundlage der vorstehenden Gleichung bestimmte Gesamtleistung $P_{\text{CU}i,\text{Prio1}}$ für die i-te lokale Steuerungseinrichtung 110a-c kompatibel mit lokalen Leistungsgrenzwerten der entsprechenden lokalen Steuerungseinrichtung 110a-c ist. Falls beispielsweise die auf der Grundlage der vorstehenden Gleichung bestimmte Gesamtleistung $P_{\text{CU}i,\text{Prio1}}$ für die i-te lokale Steuerungseinrichtung 110a-c größer als ein lokaler Leistungsgrenzwert der entsprechenden lokalen Steuerungseinrichtung 110a-c ist, kann die Prozessoreinrichtung 111a der zentralen Datenverarbeitungsvorrichtung 110a ausgebildet sein, die der i-ten lokalen Steuerungseinrichtung 110a-c zugewiesene Gesamtleistung $P_{\text{CU}i,\text{Prio1}}$ zu erniedrigen und die Gesamtleistung einer oder mehrerer der anderen lokalen Steuerungseinrichtungen 110a-c entsprechend zu erhöhen.

Jede lokale Steuerungseinrichtung 110a-c ist ausgebildet, die von der zentralen Datenverarbeitungsvorrichtung 110a zugewiesene Gesamtleistung $P_{\text{CU}i,\text{Prio1}}$ auf die dazugehörigen aktiven Aufladeeinrichtungen 120a-c zum Aufladen einer Batterie höchster Priorität aufzuteilen. Hierzu ist gemäß einer Ausführungsform die Prozessoreinrichtung jeder lokalen Steuerungseinrichtung 120a-c ausgebildet, die von der zentralen Datenverarbeitungsvorrichtung 110a zugewiesene Gesamtleistung $P_{\text{CU}i,\text{Prio1}}$ auf die dazugehörigen aktiven Aufladeeinrichtungen 120a-c zum Aufladen einer Batterie höchster Priorität auf der Grundlage der folgenden Gleichung aufzuteilen:

$$P_{\text{charge, Charger,Prio1, i}} = SF_{local,\text{Prio1}} \cdot P_{\text{max, Charger,Prio1,i}},$$

wobei der lokale Skalierungsfaktor $SF_{local,\text{Prio1}}$ gemäß der folgenden Gleichung auf der von der zentralen Datenverarbeitungsvorrichtung 110a zugewiesenen Gesamtleistung $P_{\text{CU}i,\text{Prio1}}$ basiert:

$$SF_{local,\text{Prio1}} = \frac{P_{\text{CU}_i,\text{Prio1}}}{P_{\text{max,active, Chargers,Prio1}}}.$$

Gemäß einer Ausführungsform ist die zentrale Datenverarbeitungsvorrichtung 110a und jede der lokalen Steuerungseinrichtungen 110a-c ausgebildet, die vorstehend beschriebenen Schritte zum Aufladen einer Vielzahl von Batterien mit höchster Priorität, z.B. Prio1 analog für das Aufladen einer Vielzahl von Batterien mit niedrigeren Prioritäten, z.B. Prio2 und Prio3 durchzuführen.

Gemäß einer Ausführungsform ist jede lokale Steuerungseinrichtung 110a-c ausgebildet, die Einhaltung lokaler Leistungsgrenzwerte für das Aufladen Batterien unterschiedlicher Priorität zu überprüfen. Hierzu ist gemäß einer Ausführungsform die Prozessoreinrichtung jeder lokalen Steuerungseinrichtung 110a-c ausgebildet, die jeweilige maximale Gesamtleistung aller dazugehörigen aktiven Aufladeeinrichtungen 120a-c für Batterien mit der höchsten Priorität (Prio1) auf das lokalen Gesamtleistungsgrenzwert $P_{\text{Limit,Local}}$ zu beschränken. Mit anderen Worten: in einer Ausführungsform ist die Prozessoreinrichtung jeder lokalen Steuerungseinrichtung 110a-c ausgebildet, den folgenden Algorithmus zu implementieren:

$$\text{if } (P_{\text{max,active,Chargers,Prio1}} > P_{\text{Limit,Local}})$$

$$P_{\text{max,active,Chargers,Prio1}} = P_{\text{Limit,Local}}$$

end

In einer weiteren Ausführungsform kann die die Prozessoreinrichtung jeder lokalen Steuerungseinrichtung 110a-c ausgebildet sein, für Aufladeeinrichtungen 120a-c bzw. Batterien mit niedriger Priorität (z.B. Prio2 und Prio3) den folgenden Algorithmus zu implementieren:

if

$$(P_{\text{max,active,Chargers,Prio1}} + P_{\text{max,active,Chargers,Prio2}} > P_{\text{Limit,Local}})$$

$$P_{\text{max,active,Chargers,Prio2}} = P_{\text{Limit,Local}} - P_{\text{max,active,Chargers,Prio1}}$$

End

Im Folgenden sollen die vorstehend mehr algorithmisch bzw. mathematisch beschriebenen Ausführungsformen anhand eines konkreten Beispiels veranschaulicht werden. In diesem Beispiel hat: die lokale Steuerungseinrichtung 110a keine Aufladeeinrichtung 120a höchster Priorität, zwei Aufladeeinrichtungen 120a mittlerer Priorität mit jeweiliger Maximalleistung 19,5 kW (und somit einer summierten Maximalleistung von 39 kW) und eine Aufladeeinrichtung 120a niedrigster Priorität mit Maximalleistung 10 kW; die lokale Steuerungseinrichtung 110b zwei Aufladeeinrichtungen 120b höchster Priorität mit jeweiliger Maximalleistung 33 kW (und somit einer summierten Maximalleistung von 66 kW), eine Aufladeeinrichtung 120b mittlerer Priorität mit Maximalleistung 10 kW und zwei Aufladeeinrichtungen 120b niedrigster Priorität mit jeweiliger Maximalleistung 19,5 kW (und somit einer summierten Maximalleistung von 39 kW); und die lokale Steuerungseinrichtung 110c zwei Aufladeeinrichtungen 120c höchster Priorität mit jeweiliger Maximalleistung 19,5 kW (und somit einer summierten Maximalleistung von 39 kW), keine Aufladeeinrichtung 120c mittlerer Priorität und zwei Aufladeeinrichtungen 120c niedrigster Priorität mit jeweiliger Maximalleistung 33 kW (und somit einer summierten Maximalleistung von 66 kW).

In diesem Beispiel hat die lokale Steuerungseinrichtung 110a einen lokalen Leistungsgrenzwert von 20 kW, die lokale Steuerungseinrichtung 110b einen lokalen Leistungsgrenzwert von 200 kW und die lokale Steuerungseinrichtung 110c einen lokalen Leistungsgrenzwert von 20 kW. Auf der Grundlage dieser Leitungsgrenzwerte ist die Datenverarbeitungsvorrichtung 110a in einer Ausführungsform dazu ausgebildet, für Batterien mit der Priorität Prio1 der lokalen Steuerungseinrichtung 110a keine Leistung, der lokalen Steuerungseinrichtung 110b eine Leistung von 66 kW und der lokalen Steuerungseinrichtung 110c eine Leistung von 20 kW zuzuteilen, woraus sich für Batterien mit der Priorität Prio1 eine Gesamtleistung von 86 kW ergibt. Für Batterien mit der niedrigeren Priorität Prio2 ist die Datenverarbeitungsvorrichtung 110a in einer Ausführungsform dazu ausgebildet, der lokalen Steuerungseinrichtung 110a eine Leistung von 20 kW, der lokalen Steuerungseinrichtung 110b eine Leistung von 10 kW und der lokalen Steuerungseinrichtung 110c keine Leistung zuzuteilen, woraus sich für Batterien mit der Priorität Prio2 eine Gesamtleistung von 30 kW ergibt. Für Batterien mit der niedrigsten Priorität Prio3 ist die Datenverarbeitungsvorrichtung 110a in einer Ausführungsform dazu ausgebildet, der lokalen Steuerungseinrichtung 110a keine Leistung, der lokalen Steuerungseinrichtung 110b eine Leistung von 39 kW und der lokalen Steuerungseinrichtung 110c keine Leistung zuzuteilen, woraus sich für Batterien mit der Priorität Prio3 eine Gesamtleistung von 39 kW ergibt.

Für einen globalen Leistungsgrenzwert von beispielsweise 100 kW beträgt das vorstehend beschriebene globale Leistungsverhältnis $SF_{\text{Global,Prio1}}$ für Batterien mit der Priorität Prio1:

$$SF_{\text{Global,Prio1}} = \frac{P_{\text{Limit,Global,Prio1}}}{P_{\text{Total,Prio1}}} = \frac{100\,kW}{86\,kW} = 1{,}163,$$

welches, wie vorstehend beschrieben, ungefähr gleich 1 sein soll. Für die lokale Steuerungseinrichtung 110a ergibt sich somit für Batterien mit der Priorität Prio1 ein lokales Leistungsverhältnis $SF_{\text{local,Prio1}}$ von:

$$SF_{\text{local,Prio1}} = \frac{P_{\text{CU}_i,\text{Prio1}}}{P_{\text{max,active, Chargers,Prio1}}} = 0.$$

Für die lokale Steuerungseinrichtung 110b ergibt sich für Batterien mit der Priorität Prio1 ein lokales Leistungsverhältnis $SF_{\text{local,Prio1}}$ von:

$$SF_{\text{local,Prio1}} = \frac{P_{\text{CU}_i,\text{Prio1}}}{P_{\text{max,active, Chargers,Prio1}}} = \frac{66\,kW}{66\,kW} = 1.$$

Für die lokale Steuerungseinrichtung 110c ergibt sich für Batterien mit der Priorität Prio1 ein lokales Leistungsverhältnis $SF_{\text{local,Prio1}}$ von:

$$SF_{\text{local,Prio1}} = \frac{P_{\text{CU}_i,\text{Prio1}}}{P_{\text{max,active, Chargers,Prio1}}} = \frac{20\,kW}{39\,kW} = 0{,}513.$$

Auf der Grundlage der folgenden bereits vorstehend beschriebenen Gleichung:

$$P_{\text{charge, Charger,Prio1, i}} = SF_{local,\text{Prio1}} \cdot P_{\text{max, Charger,Prio1,i}},$$

ist die zentrale Datenverarbeitungsvorrichtung 110a ausgebildet, der ersten lokalen Steuerungseinrichtung 110a für Batterien mit der Priorität Prio1 keine Leistung zuzuteilen, den beiden Aufladeeinrichtungen 120b der lokalen Steuerungseinrichtung 110b für Batterien mit der Priorität Prio1 eine jeweilige Leistung von 33 kW zuzuteilen, und den beiden Aufladeeinrichtungen 120c der lokalen Steuerungseinrichtung 110c für Batterien mit der Priorität Prio1 eine jeweilige Leistung von 10 kW zuzuteilen, was sich wie folgt ergibt:

$$P_{\text{charge, Charger,Prio1, i}} = SF_{local,\text{Prio1}} \cdot P_{\text{max, Charger,Prio1,i}} = 0{,}513 \cdot 19{,}5\,kW = 10\,kW.$$

Für das Aufladen der Batterien mit der nächstniedrigeren Priorität Prio2 ergibt sich für dieses Beispiel eine verbleibende Gesamtleistung von:

$$P_{\text{Limit,Global,Prio2}} = P_{\text{Limit,Global}} - P_{\text{Limit,Global,Prio1}} = 100\,kW - 86\,kW = 14\,kW.$$

Somit beträgt für Batterien mit der Priorität Prio2 das vorstehend beschriebene globale Leistungsverhältnis $SF_{\text{Global,Prio2}}$:

$$SF_{\text{Global,Prio2}} = \frac{P_{\text{Limit,Global,Prio2}}}{P_{\text{Total,Prio2}}} = \frac{14\,kW}{30\,kW} = 0{,}467.$$

Somit beträgt in diesem Beispiel für Batterien mit der Priorität Prio2 die der lokalen Steuerungseinrichtung 110a zugewiesene Leistung $P_{\text{CU}i,\text{Prio2}} = 0{,}467 \cdot 20\,kW = 9{,}33\,kW$, die der lokalen Steuerungseinrichtung 110b zugewiesene Leistung $P_{\text{CU}i,\text{Prio2}} = 0{,}467 \cdot 10\,kW = 4{,}67\,kW$ und die der lokalen Steuerungseinrichtung 110c zugewiesene Leistung $P_{\text{CU}i,\text{Prio2}} = 0\,kW$.

Für die lokale Steuerungseinrichtung 110a ergibt sich somit für Batterien mit der Priorität Prio2 ein lokales Leistungsverhältnis $SF_{\text{local,Prio2}}$ von:

$$SF_{\text{local,Prio2}} = \frac{P_{\text{CU}_i,\text{Prio2}}}{P_{\text{max,active, Chargers,Prio2}}} = \frac{9{,}33\,kW}{39\,kW} = 0{,}239.$$

Für die lokale Steuerungseinrichtung 110b ergibt sich für Batterien mit der Priorität Prio2 ein lokales Leistungsverhältnis $SF_{\text{local,Prio2}}$ von:

$$SF_{\text{local,Prio2}} = \frac{P_{CU_i,\text{Prio2}}}{P_{\text{max,active, Chargers,Prio2}}} = \frac{4{,}67\ kW}{10\ kW} = 0{,}467.$$

Für die lokale Steuerungseinrichtung 110c ergibt sich für Batterien mit der Priorität Prio2 ein lokales Leistungsverhältnis $SF_{\text{local,Prio2}}$ von 0 kW.

Auf der Grundlage der folgenden bereits vorstehend beschriebenen Gleichung:

$$P_{\text{charge, Charger,Prio2, i}} = SF_{local,\text{Prio2}} \cdot P_{\text{max, Charger,Prio2,i}},$$

ist die zentrale Datenverarbeitungsvorrichtung 110a ausgebildet, der ersten lokalen Steuerungseinrichtung 110a für Batterien mit der Priorität Prio2 den beiden Aufladeeinrichtungen 120a der lokalen Steuerungseinrichtung 110a für Batterien mit der Priorität Prio2 eine jeweilige Leistung von 4,67 kW zuzuteilen und der Aufladeeinrichtung 120a der lokalen Steuerungseinrichtung 110b für Batterien mit der Priorität Prio2 eine Leistung von 4,67 kW zuzuteilen, was sich wie folgt ergibt:

$$P_{\text{charge, Charger,Prio2, i}} = SF_{local,\text{Prio2}} \cdot P_{\text{max, Charger,Prio2,i}} = 0{,}239 \cdot 19{,}5\ \text{kW} = 4{,}67\ \text{kW}.$$

$$P_{\text{charge, Charger,Prio2, i}} = SF_{local,\text{Prio2}} \cdot P_{\text{max, Charger,Prio2,i}} = 0{,}467 \cdot 10\ \text{kW} = 4{,}67\ \text{kW}.$$

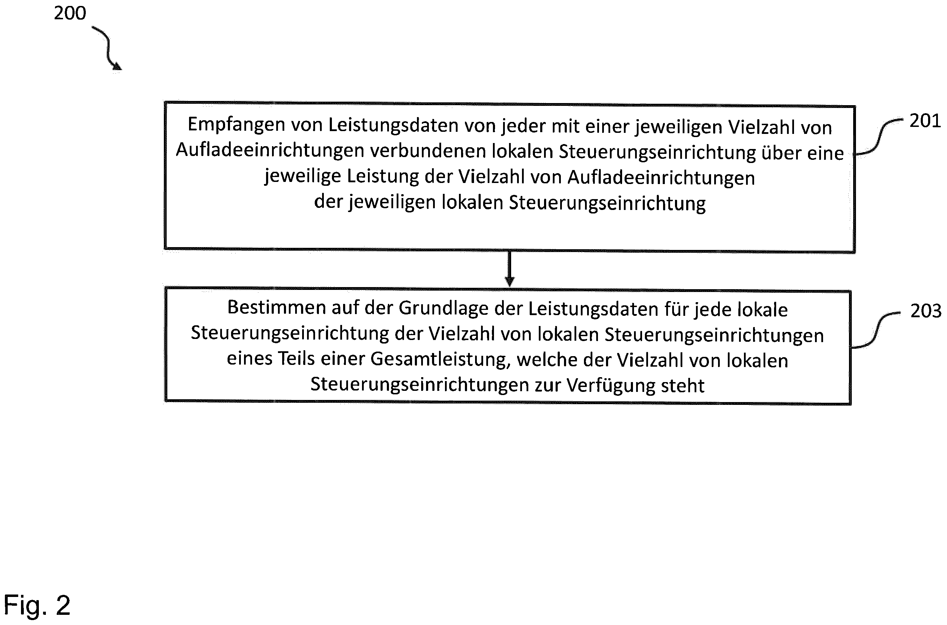

Figur 2 zeigt ein Flussdiagramm, welches Schritte eines Verfahrens 200 zum Betreiben der zentralen Vorrichtung 110a zum Leistungsmanagement der Vielzahl von lokalen Steuerungseinrichtungen 110a-c zum Steuern der Vielzahl von Aufladeeinrichtungen 120a-c zum Aufladen einer Vielzahl von Batterien für die Vielzahl von Flurförderzeugen 130a-c. Das Verfahren 200 umfasst einen Schritt 201 des Empfangens von Leistungsdaten von jeder mit einer jeweiligen Vielzahl von Aufladeeinrichtungen 120a-c verbundenen lokalen Steuerungseinrichtung 110a-c über eine jeweilige Leistung der Vielzahl von Aufladeeinrichtungen 120a-c der jeweiligen lokalen Steuerungseinrichtung 110a-c. Ferner umfasst das Verfahren 200 einen Schritt 203 des Bestimmens auf der Grundlage der Leistungsdaten für jede lokale Steuerungseinrichtung der Vielzahl von lokalen Steuerungseinrichtungen eines Teils einer Gesamtleistung, welche der Vielzahl von lokalen Steuerungseinrichtungen zur Verfügung steht.

Das Verfahren 200 kann mittels der vorstehend im Detail beschriebenen zentralen Datenverarbeitungsvorrichtung 110a durchgeführt werden. Daher ergeben sich weitere mögliche Ausführungsformen des Verfahrens 200 aus den vorstehend und nachstehend beschriebenen weiteren Ausführungsformen der Vorrichtung 110a. Mit anderen Worten: gemäß einer Ausführungsform kann das Bestimmen der jeweiligen Teile des Gesamtleistung im Schritt 203 zentral durch die Vorrichtung 100a, beispielsweise in Form eines externen Servers oder in Form einer lokalen Master-Steuerungseinrichtung erfolgen, welche die so bestimmen Werte den lokalen Steuerungseinrichtungen zuweist. Gemäß einer weiteren Ausführungsform kann das Bestimmen eines jeweiligen Teils des Gesamtleistung im Schritt 203 dezentral durch jede der lokalen Steuerungseinrichtungen erfolgen.

## Patentansprüche

1. Zentrale Vorrichtung (110a) zum Leistungsmanagement einer Vielzahl von lokalen Steuerungseinrichtungen (110a-c) zum Steuern einer Vielzahl von Aufladeeinrichtungen (120a-c) zum Aufladen einer Vielzahl von Batterien für eine Vielzahl von Flurförderzeugen (130a-c), wobei die zentrale Vorrichtung (110a) umfasst:

   eine Kommunikationsschnittstelle (113a), welche ausgebildet ist, von jeder mit einer jeweiligen Vielzahl von Aufladeeinrichtungen (120a-c) verbundenen lokalen Steuerungseinrichtung (110a-c) Leistungsdaten über eine jeweilige Leistung der Vielzahl von Aufladeeinrichtungen (120a-c) der jeweiligen lokalen Steuerungseinrichtung (110a-c) zu empfangen; und
   eine Prozessoreinrichtung (111a), welche ausgebildet ist, auf der Grundlage der Leistungsdaten jeder lokalen Steuerungseinrichtung für die Vielzahl von lokalen Steuerungseinrichtungen (110a-c) einen Teil einer Gesamtleistung zu bestimmen und der entsprechenden lokalen Steuerungseinrichtung zuweisen, welche der Vielzahl von lokalen Steuerungseinrichtungen (110a-c) zur Verfügung steht.

2. Zentrale Vorrichtung (110a) nach Anspruch 1, wobei die Prozessoreinrichtung (111a) ausgebildet ist, auf der Grundlage der Leistungsdaten und einer jeweiligen Priorität der zu einer jeweiligen lokalen Steuerungseinrichtung (110a-c) dazugehörigen Aufladeeinrichtungen (120a-c) jeder lokalen Steuerungseinrichtung der Vielzahl von lokalen Steuerungseinrichtungen (110a-c) einen Teil der Gesamtleistung zuzuweisen.

3. Zentrale Vorrichtung (110) nach Anspruch 1 oder 2, wobei die > Prozessoreinrichtung (111a) ausgebildet ist, auf der Grundlage der Leistungsdaten und eines globalen Leistungsgrenzwertes jeder lokalen Steuerungseinrichtung der Vielzahl von lokalen Steuerungseinrichtungen (110a-c) einen Teil der Gesamtleistung zuzuweisen.

4. Zentrale Vorrichtung (110) nach einem der vorhergehenden Ansprüche, wobei die Prozessoreinrichtung (111a) ausgebildet ist, auf der Grundlage der Leistungsdaten und eines jeweiligen Leistungsgrenzwertes der jeweiligen lokalen Steuerungseinrichtung jeder lokalen Steuerungseinrichtung der Vielzahl von lokalen Steuerungseinrichtungen (110a-c) einen Teil der Gesamtleistung zuzuweisen.

5. System (100) zum Aufladen einer Vielzahl von Batterien, wobei das System umfasst:

    eine Vielzahl von lokalen Steuerungseinrichtungen (110a-c) zum Steuern einer Vielzahl von Aufladeeinrichtungen (120a-c) zum Aufladen einer Vielzahl von Batterien für eine Vielzahl von Flurförderzeugen (130a-c); und
    eine zentrale Vorrichtung(110a) zum Leistungsmanagement der Vielzahl von lokalen Steuerungseinrichtungen (110a-c) gemäß einem der Ansprüche 1 bis 4.

6. System (100) nach Anspruch 5, wobei jede lokale Steuerungseinrichtung (110a-c) ausgebildet ist, in zeitlichen Abständen oder in Reaktion auf ein definiertes Ereignis, von jeder mit einer jeweiligen Batterie elektrisch verbundenen dazugehörigen Aufladeeinrichtung (120a-c) über eine jeweilige Datenverbindung Statusinformationen über den Aufladestatus der Aufladeeinrichtung (120a-c) abzufragen und/oder zu empfangen.

7. System (100) nach Anspruch 6, wobei die Statusinformationen über den Aufladestatus einer Aufladeeinrichtung (120a-c) Informationen über einen Aufladestrom, eine Aufladespannung, eine Aufladeleistung, einen Aufladefüllstand einer Batterie, eine Seriennummer einer Batterie, eine Seriennummer eines Flurförderzeugs (130a-c), mit dem die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallladeleistung der Aufladeeinrichtung (120a-c) umfassen.

8. System (100) nach einem der Ansprüche 5 bis 7, wobei das System (100) ferner die Vielzahl von Aufladeeinrichtungen (120a-c) mit einer Vielzahl von ersten Aufladeeinrichtungen zum Aufladen einer Vielzahl von aufladbaren Lithiumbatterien und einer Vielzahl von zweiten Aufladeeinrichtungen zum Aufladen einer Vielzahl von aufladbaren Bleibatterien umfasst.

9. System (100) nach einem der Ansprüche 5 bis 8, wobei das System (100) ferner die Vielzahl von Flurförderzeugen (130a-c) umfasst, wobei die Vielzahl von Flurförderzeugen (130a-c) eine Vielzahl von Gabelstaplern (130a-c) und/oder mobilen Industrierobotern (130a-c) umfasst.

10. Verfahren (200) zum Betreiben einer zentralen Vorrichtung (110a) zum Leistungsmanagement einer Vielzahl von lokalen Steuerungseinrichtungen (110a-c) zum Steuern einer Vielzahl von Aufladeeinrichtungen (120a-c) zum Aufladen einer Vielzahl von Batterien für eine Vielzahl von Flurförderzeugen (130a-c), wobei das Verfahren (200) umfasst:

    Empfangen (201) von Leistungsdaten von jeder mit einer jeweiligen Vielzahl von Aufladeeinrichtungen (120a-c) verbundenen lokalen Steuerungseinrichtung (110a-c) über eine jeweilige Leistung der Vielzahl von Aufladeeinrichtungen (120a-c) der jeweiligen lokalen Steuerungseinrichtung (110a-c); und
    Bestimmen (203) auf der Grundlage der Leistungsdaten für jede lokale Steuerungseinrichtung der Vielzahl von lokalen Steuerungseinrichtungen (110a-c) eines Teils einer Gesamtleistung, welche der Vielzahl von lokalen Steuerungseinrichtungen (110a-c) zur Verfügung steht.

Fig. 1

200

Empfangen von Leistungsdaten von jeder mit einer jeweiligen Vielzahl von Aufladeeinrichtungen verbundenen lokalen Steuerungseinrichtung über eine jeweilige Leistung der Vielzahl von Aufladeeinrichtungen der jeweiligen lokalen Steuerungseinrichtung — 201

Bestimmen auf der Grundlage der Leistungsdaten für jede lokale Steuerungseinrichtung der Vielzahl von lokalen Steuerungseinrichtungen eines Teils einer Gesamtleistung, welche der Vielzahl von lokalen Steuerungseinrichtungen zur Verfügung steht — 203

Fig. 2

EP 4 465 476 A1

Europäisches
Patentamt

European
Patent Office

Office européen
des brevets

# EUROPÄISCHER RECHERCHENBERICHT

**Nummer der Anmeldung**

EP 24 16 8397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 832 837 A1 (TOYOTA JIDOSHOKKI KK [JP]) 9. Juni 2021 (2021-06-09) * Paragraphen [0017], [0019] - [0023], [0031], [0039], [0043]; Anspruch 1; Abbildungen 1, 2, 10, 13 * ----- | 1-10 | INV. H02J7/00 B60L53/63 B60L53/67 B60L53/68 |
| | | | **RECHERCHIERTE SACHGEBIETE (IPC)** |
| | | | H02J B60L |

Der vorliegende Recherchenbericht wurde für alle Patentansprüche erstellt

| Recherchenort | Abschlußdatum der Recherche | Prüfer |
|---|---|---|
| München | 8. Oktober 2024 | Meyer, Andreas Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 8397

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | Datum der Veröffentlichung | Mitglied(er) der Patentfamilie | Datum der Veröffentlichung |
|---|---|---|---|
| EP 3832837 A1 | 09-06-2021 | EP 3832837 A1 | 09-06-2021 |
| | | JP 2020022262 A | 06-02-2020 |
| | | US 2021261014 A1 | 26-08-2021 |
| | | WO 2020026900 A1 | 06-02-2020 |

Für nähere Einzelheiten zu diesem Anhang : siehe Amtsblatt des Europäischen Patentamts, Nr.12/82

EPO FORM P0461